(19)

Europäisches
Patentamt
European
Patent Office
Office européen
des brevets

(11) **EP 2 921 519 A1**

(12) **EUROPEAN PATENT APPLICATION**

(43) Date of publication:
**23.09.2015 Bulletin 2015/39**

(51) Int Cl.:
***C08J 7/04*** *(2006.01)*

(21) Application number: **14382094.2**

(22) Date of filing: **17.03.2014**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Dow Global Technologies LLC Midland, MI 48674 (US)**

(72) Inventors:
• **Amici, Marco 8820 Waedenswil (CH)**

• **Mazzola, Nicolas 13209-460 Jundiai, SP (BR)**
• **Allgeuer, Thomas 8832 Wollerau (CH)**
• **Parkinson, Shaun 43007 Tarragona (ES)**
• **Gomes, Jorge 04601-040 Sao Paulo SP (BR)**

(74) Representative: **Elzaburu S.L.P. C/ Miguel Angel, 21 28010 Madrid (ES)**

(54) **A multilayer structure**

(57) The instant invention provides a multilayer structure comprising: (a) a substrate, wherein said substrate is optionally surface treated on at least one surface and has a surface energy in the range of at least 32 dyn, (b) a sealing layer derived from the application of one or more aqueous dispersions to said at least one surface of said substrate, and wherein the one or more aqueous dispersion comprise the melt kneading product of: (a) one or more a base polymers selected from the group consisting of ethylene and optionally one or more $\alpha$-olefins, propylene and optionally one or more $\alpha$-olefins; (b) one or more a stabilizing agents; (c) in the presence of a neutralizing agent and (d) water.

EP 2 921 519 A1

**Description**

**Field of Invention**

The instant invention relates to a multilayer structure, and more specifically packaging devices.

**Background of the Invention**

Aqueous dispersions of a thermoplastic resin of various types are known in the art. Aqueous dispersions have been used in a wide variety of fields since an aqueous dispersion prepared by using water as its dispersion medium is far more advantageous than the dispersions prepared by using an organic solvent for the dispersion medium in view of flammability, working environment, handling convenience, and the like. For example, when an aqueous dispersion is coated and dried on a surface of a substrate such as paper, fiber, wood, metal, or plastic molded article, the resin coating formed will provide the substrate with water resistance, oil resistance, chemical resistance, corrosion resistance and heat sealability.

One particular application for coatings made from dispersions is in packaging and storage container applications. To be useful, a balance of performance properties such as low heat seal initiation temperature, a high hot tack strength, a broad hot sealing window, good interlayer adhesion, and a high softening point is desirable.

The commercial importance of balanced sealant properties is well understood. That is, low heat seal initiation temperatures are important for improved sealing speeds and reduced energy utilization. A broad sealing window is important for insuring package integrity, sealing equipment flexibility and low package leakage rates.

Good interlayer adhesion is also important for good package integrity as well as good package or container aesthetics. High softening points or temperatures are desired where goods are packaged at elevated temperatures such as in hot-fill applications. Traditionally, when attempting to achieve balanced sealant properties, enhancement of one particular resin property has required some sacrifice with respect to another important property.

Frangible sealants are a rather unique class of sealant that exhibit a very different heat seal strength behavior at different sealing temperatures. In particular, they are usually characterized by a double seal plateau behavior, with a relatively low strength (peelable) seal strength at lower temperatures and a higher seal strength at higher temperatures. This characteristic allows a package to be sealed with a selective seal strength in various zones of the packaging itself. An example of this would be a low strength seal separating two components that could be mixed by breaking the seal by applying pressure while the remaining seals of the package would still remain intact.

Additionally, easy to open packages are known in the market for various applications. It generally brings convenience to consumers, but their additional cost can sometimes be detrimental.

While there has been a significant development in packaging devices, there is still a need for packaging devices having frangible sealants with improved properties.

**Summary of the Invention**

The instant invention provides a multilayer structure comprising: (a) a substrate, wherein said substrate is optionally surface treated on at least one surface and has a surface energy in the range of at least 32 dyn, (b) a sealing layer derived from the application of one or more aqueous dispersions to said at least one surface of said substrate, and wherein the one or more aqueous dispersion comprise the melt kneading product of: (a) one or more a base polymers selected from the group consisting of ethylene and optionally one or more $\alpha$-olefins, propylene and optionally one or more $\alpha$-olefins; (b) one or more a stabilizing agents; (c) in the presence of a neutralizing agent and (d) water.

**Brief Description of the Drawings**

For the purpose of illustrating the invention, there is shown in the drawings a form that is exemplary; it being understood, however, that this invention is not limited to the precise arrangements and instrumentalities shown.

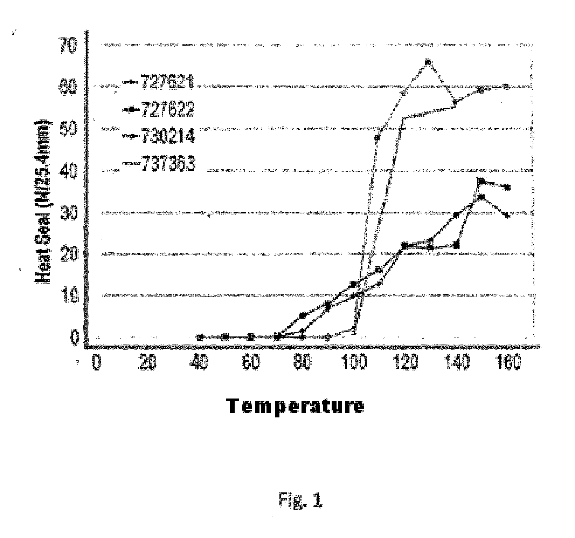

**Fig. 1** is a a graph illustrating the properties of Inventive Samples and Comparative Samples.

**Detailed Description of the Invention**

The instant invention provides a multilayer structure comprising: (a) a substrate, wherein said substrate is optionally surface treated on at least one surface and has a surface energy in the range of at least 32 dyn, (b) a sealing layer derived from the application of one or more aqueous dispersions to said at least one surface of said substrate, and wherein the one or more aqueous dispersion comprise the melt kneading product of: (a) one or more a base polymers selected from the group consisting of ethylene and optionally one or more $\alpha$-olefins, propylene and optionally one or more α-olefins; (b) one or more a stabilizing agents; (c) in the presence of a neutralizing agent and (d) water.

In one embodiment, the inventive multilayer structure comprises a sealing layer that is characterized by one or more of the following characteristics: (a) has a heat seal strength of greater than or equal to 0.6 N/15 mm at a sealing temperature from 60 to 100 °C; (b) has a heat seal strength of greater than or equal to 3 N/15 mm at a sealing temperature from 110 to 140 °C.

In one embodiment, the inventive multilayer structure comprises a dispersion having a pH in the range of from 8 to 11.

In one embodiment, the inventive multilayer structure comprises a dispersion having an average particle size diameter in the range of from 0.5 to 5 μm.

In one embodiment, the inventive multilayer structure comprises a dispersion comprising 40 to 70 percent by weight of water.

In one embodiment, the inventive multilayer structure comprises a sealing layer having a thickness in the range of from 0.5 to 10 μm.

## Base Polymer

The one or more aqueous dispersions comprise from 20 to 70 percent by weight of one or more base polymers, based on the total weight of the solid content of the aqueous dispersion. All individual values and subranges from 20 to 70 weight percent are included herein and disclosed herein; for example, the weight percent can be from a lower limit of 20, 25, 30, or 35 weight percent to an upper limit of 40, 50, 55, 60, 65, 70, or 75 weight percent. The aqueous dispersion comprises at least one or more base polymers. The base polymer is a thermoplastic polymer. In one embodiment, the base polymer is selected from the group consisting of ethylene and optionally one or more α-olefins, propylene and optionally one or more α-olefins, and combinations thereof.

Examples of thermoplastic materials include, but are not limited to, homopolymers and copolymers (including elastomers) of one or more alpha-olefins such as ethylene, propylene, 1-butene, 3-methyl-1-butene, 4-methyl-1-pentene, 3-methyl-1-pentene, 1-heptene, 1-hexene, 1-octene, 1-decene, and 1-dodecene, as typically represented by polyethylene, polypropylene, poly-1-butene, poly-3-methyl-1-butene, poly-3-methyl-1-pentene, poly-4-methyl-1-pentene, ethylene-propylene copolymer, ethylene-1-butene copolymer, and propylene-1-butene copolymer; copolymers (including elastomers) of an alpha-olefin with a conjugated or non-conjugated diene, as typically represented by ethylene-butadiene copolymer and ethylene-ethylidene norbornene copolymer; and polyolefins (including elastomers) such as copolymers of two or more alpha-olefins with a conjugated or non-conjugated diene, as typically represented by ethylene-propylene-butadiene copolymer, ethylene-propylene- dicyclopentadiene copolymer, ethylene-propylene-1,5-hexadiene copolymer, and ethylene-propylene-ethylidene norbornene copolymer; ethylene-vinyl compound copolymers such as ethylene-vinyl acetate copolymer, ethylene-vinyl alcohol copolymer, ethylene-vinyl chloride copolymer, ethylene acrylic acid or ethylene-(meth)acrylic acid copolymers, and ethylene-(meth)acrylate copolymer; styrenic copolymers (including elastomers) such as polystyrene, ABS, acrylonitrile-styrene copolymer, α-methylstyrene-styrene copolymer, styrene vinyl alcohol, styrene acrylates such as styrene methylacrylate, styrene butyl acrylate, styrene butyl methacrylate, and styrene butadienes and crosslinked styrene polymers; and styrene block copolymers (including elastomers) such as styrene-butadiene copolymer and hydrate thereof, and styrene-isoprene-styrene triblock copolymer; polyvinyl compounds such as polyvinyl chloride, polyvinylidene chloride, vinyl chloride-vinylidene chloride copolymer, polymethyl acrylate, and polymethyl methacrylate; polyamides such as nylon 6, nylon 6,6, and nylon 12; thermoplastic polyesters such as polyethylene terephthalate and polybutylene terephthalate; polycarbonate, polyphenylene oxide, and the like; and glassy hydrocarbon-based resins, including poly-dicyclopentadiene polymers and related polymers (copolymers, terpolymers); saturated mono-olefins such as vinyl acetate, vinyl propionate, vinyl versatate, and vinyl butyrate and the like; vinyl esters such as esters of monocarboxylic acids, including methyl acrylate, ethyl acrylate, n-butyl acrylate, isobutyl acrylate, 2-ethylhexyl acrylate, dodecyl acrylate, n-octyl acrylate, phenyl acrylate, methyl methacrylate, ethyl methacrylate, and butyl methacrylate and the like; acrylonitrile, methacrylonitrile, acrylamide, mixtures thereof; resins produced by ring opening metathesis and cross metathesis polymerization and the like. These resins may be used either alone or in combinations of two or more.

In selected embodiments, base polymer may, for example, comprise one or more polyolefins selected from the group consisting of ethylene-alpha olefin copolymers, propylene-alpha olefin copolymers, and olefin block copolymers. In particular, in select embodiments, the base polymer may comprise one or more non-polar polyolefins. In one embodiment, one or more a base polymers are selected from the group consisting of ethylene and optionally one or more α-olefins, propylene and optionally one or more α-olefins, and combinations thereof.

In specific embodiments, polyolefins such as polypropylene, polyethylene, copolymers thereof, and blends thereof, as well as ethylene-propylene-diene terpolymers, may be used. In some embodiments, exempalry olefinic polymers include homogeneous polymers, as described in U.S. Pat. No. 3,645,992; high density polyethylene (HDPE), as described in U.S. Pat. No. 4,076,698; heterogeneously branched linear low density polyethylene (LLDPE); heterogeneously branched ultra low linear density polyethylene (ULDPE); homogeneously branched, linear ethylene/alpha-olefin copolymers; homogeneously branched, substantially linear ethylene/alpha-olefin polymers, which can be prepared, for example, by processes disclosed in U.S. Pat. Nos. 5,272,236 and 5,278,272, the disclosures of which are incorporated herein by reference; and high pressure, free radical polymerized ethylene polymers and copolymers such as low density polyethylene (LDPE) or ethylene vinyl acetate polymers (EVA).

In other particular embodiments, the base polymer may, for example, be ethylene vinyl acetate (EVA) based polymers. In other embodiments, the base polymer may, for example, be ethylene-methyl acrylate (EMA) based polymers. In other particular embodiments, the ethylene-alpha olefin copolymer may, for example, be ethylene-butene, ethylene-hexene, or ethylene-octene copolymers or interpolymers. In other particular embodiments, the propylene-alpha olefin copolymer may, for example, be a propylene-ethylene or a propylene-ethylene-butene copolymer or interpolymer.

In certain other embodiments, the base polymer may, for example, be a semi-crystalline polymer and may have a melting point of less than 110°C. In another embodiment, the melting point may be from 25 to 100°C. In another embodiment, the melting point may be between 40 and 85°C.

In one particular embodiment, the base polymer is a propylene/alpha-olefin copolymer, which is characterized as having substantially isotactic propylene sequences. "Substantially isotactic propylene sequences" means that the sequences have an isotactic triad (mm) measured by $^{13}C$ NMR of greater than about 0.85; in the alternative, greater than about 0.90; in another alternative, greater than about 0.92; and in another alternative, greater than about 0.93. Isotactic triads are well-known in the art and are described in, for example, U.S. Patent No. 5,504,172 and International Publication No. WO 00/01745, which refer to the isotactic sequence in terms of a triad unit in the copolymer molecular chain determined by $^{13}C$ NMR spectra.

The propylene/alpha-olefin copolymer may have a melt flow rate in the range of from 0.1 to 25 g/10 minutes, measured in accordance with ASTM D-1238 (at 230° C / 2.16 Kg). All individual values and subranges from 0.1 to 25 g/10 minutes are included herein and disclosed herein; for example, the melt flow rate can be from a lower limit of 0.1 g/10 minutes, 0.2 g/10 minutes, 0.5 g/10 minutes, 2 g/10 minutes, 4 g/10 minutes, 5 g/10 minutes, 10 g/10 minutes, or 15 g/10 minutes to an upper limit of 25 g/10 minutes, 20 g/10 minutes, 18 g/10 minutes, 15 g/10 minutes, 10 g/10 minutes, 8 g/10 minutes, or 5 g/10 minutes. For example, the propylene/alpha-olefin copolymer may have a melt flow rate in the range of from 0.1 to 20 g/10 minutes; or from 0.1 to 18 g/10 minutes; or from 0.1 to 15 g/10 minutes; or from 0.1 to 12 g/10 minutes; or from 0.1 to 10 g/10 minutes; or from 0.1 to 5 g/10 minutes.

The propylene/alpha-olefin copolymer has a crystallinity in the range of from at least 1 percent by weight (a heat of fusion of at least 2 Joules/gram) to 30 percent by weight (a heat of fusion of less than 50 Joules/gram). All individual values and subranges from 1 percent by weight (a heat of fusion of at least 2 Joules/gram) to 30 percent by weight (a heat of fusion of less than 50 Joules/gram) are included herein and disclosed herein; for example, the crystallinity can be from a lower limit of 1 percent by weight (a heat of fusion of at least 2 Joules/gram), 2.5 percent (a heat of fusion of at least 4 Joules/gram), or 3 percent (a heat of fusion of at least 5 Joules/gram) to an upper limit of 30 percent by weight (a heat of fusion of less than 50 Joules/gram), 24 percent by weight (a heat of fusion of less than 40 Joules/gram), 15 percent by weight (a heat of fusion of less than 24.8 Joules/gram) or 7 percent by weight (a heat of fusion of less than 11 Joules/gram). For example, the propylene/alpha-olefin copolymer may have a crystallinity in the range of from at least 1 percent by weight (a heat of fusion of at least 2 Joules/gram) to 24 percent by weight (a heat of fusion of less than 40 Joules/gram); or in the alternative, the propylene/alpha-olefin copolymer may have a crystallinity in the range of from at least 1 percent by weight (a heat of fusion of at least 2 Joules/gram) to 15 percent by weight (a heat of fusion of less than 24.8 Joules/gram); or in the alternative, the propylene/alpha-olefin copolymer may have a crystallinity in the range of from at least 1 percent by weight (a heat of fusion of at least 2 Joules/gram) to 7 percent by weight (a heat of fusion of less than 11 Joules/gram); or in the alternative, the propylene/alpha-olefin copolymer may have a crystallinity in the range of from at least 1 percent by weight (a heat of fusion of at least 2 Joules/gram) to 5 percent by weight (a heat of fusion of less than 8.3 Joules/gram). The crystallinity is measured via Differential scanning calorimetry (DSC) method. The propylene/alpha-olefin copolymer comprises units derived from propylene and polymeric units derived from one or more alpha-olefin comonomers. Exemplary comonomers utilized to manufacture the propylene/alpha-olefin co-polymer are $C_2$, and $C_4$ to $C_{10}$ alpha-olefins; for example, $C_2$, $C_4$, $C_6$ and $C_8$ alpha-olefins.

The propylene/alpha-olefin copolymer comprises from 1 to 40 percent by weight of units derived from one or more alpha-olefin comonomers. All individual values and subranges from 1 to 40 weight percent are included herein and disclosed herein; for example, the weight percent of units derived from one or more alpha-olefin comonomers can be from a lower limit of 1, 3, 4, 5, 7, or 9 weight percent to an upper limit of 40, 35, 30, 27, 20, 15, 12, or 9 weight percent. For example, the propylene/alpha-olefin copolymer comprises from 1 to 35 percent by weight of units derived from one or more alpha-olefin comonomers; or in the alternative, the propylene/alpha-olefin copolymer comprises from 1 to 30 percent by weight of units derived from one or more alpha-olefin comonomers; or in the alternative, the propylene/alpha-olefin copolymer comprises from 3 to 27 percent by weight of units derived from one or more alpha-olefin comonomers; or in the alternative, the propylene/alpha-olefin copolymer comprises from 3 to 20 percent by weight of units derived from one or more alpha-olefin comonomers; or in the alternative, the propylene/alpha-olefin copolymer comprises from 3 to 15 percent by weight of units derived from one or more alpha-olefin comonomers.

The propylene/alpha-olefin copolymer has a molecular weight distribution (MWD), defined as weight average molecular weight divided by number average molecular weight ($M_w/M_n$) of 3.5 or less; in the alternative 3.0 or less; or in another alternative from 1.8 to 3.0.

Such propylene/alpha-olefin copolymers are further described in details in the U.S. Patent Nos. 6,960,635 and 6,525,157, incorporated herein by reference. Such propylene/alpha-olefin copolymers are commercially available from The Dow Chemical Company, under the tradename VERSIFY™, or from ExxonMobil Chemical Company, under the tradename VISTAMAXX™.

In one embodiment, the propylene/alpha-olefin copolymers are further characterized as comprising (A) between 60 and less than 100, preferably between 80 and 99 and more preferably between 85 and 99, weight percent units derived from propylene, and (B) between greater than zero and 40, preferably between 1 and 20, more preferably between 4 and 16 and even more preferably between 4 and 15, weight percent units derived from at least one of ethylene and/or a $C_{4-10}$ $\alpha$-olefin; and containing an average of at least 0.001, preferably an average of at least 0.005 and more preferably an average of at least 0.01, long chain branches/ 000 total carbons, wherein the term long chain branch, as used herein, refers to a chain length of at least one (1) carbon more than a short chain branch, and short chain branch, as used herein, refers to a chain length of two (2) carbons less than the number of carbons in the comonomer. For example, a propylene/1-octene interpolymer has backbones with long chain branches of at least seven (7) carbons in length, but these backbones also have short chain branches of only six (6) carbons in length. The maximum number of long chain branches typically it does not exceed 3 long chain branches/1000 total carbons. Such propylene/alpha-olefin copolymers are further described in details in the U.S. Provisional Patent Application No. 60/988,999 and International Patent Application No. PCT/US08/082599, each of which is incorporated herein by reference.

In certain other embodiments, the base polymer, e.g. propylene/alpha-olefin copolymer, may, for example, be a semi-crystalline polymer and may have a melting point of less than 110° C. In preferred embodiments, the melting point may be from 25 to 100° C. In more preferred embodiments, the melting point may be between 40 and 85° C.

In other selected embodiments, olefin block copolymers, e.g., ethylene multi-block copolymer, such as those described in the International Publication No. WO2005/090427 and U.S.

Patent Application Publication No. US 2006/0199930, incorporated herein by reference to the extent describing such olefin block copolymers, may be used as the base polymer. Such olefin block copolymer may be an ethylene/$\alpha$-olefin interpolymer:

(a) having a $M_w/M_n$ from about 1.7 to about 3.5, at least one melting point, $T_m$, in degrees Celsius, and a density, d, in grams/cubic centimeter, wherein the numerical values of $T_m$ and d corresponding to the relationship:

$$T_m > -2002.9 + 4538.5(d) - 2422.2(d)^2;$$

or

(b) having a $M_w/M_n$ from about 1.7 to about 3.5, and being characterized by a heat of fusion, $\Delta H$ in J/g, and a delta quantity, $\Delta T$, in degrees Celsius defined as the temperature difference between the tallest DSC peak and the tallest CRYSTAF peak, wherein the numerical values of $\Delta T$ and $\Delta H$ having the following relationships:

$$\Delta T > -0.1299(\Delta H) + 62.81 \text{ for } \Delta H \text{ greater than zero and up to 130 J/g,}$$

$$\Delta T \geq 48^\circ C \text{ for } \Delta H \text{ greater than 130 J/g,}$$

wherein the CRYSTAF peak being determined using at least 5 percent of the cumulative polymer, and if less than 5 percent of the polymer having an identifiable CRYSTAF peak, then the CRYSTAF temperature being 30 °C; or
(c) being characterized by an elastic recovery, Re, in percent at 300 percent strain and 1 cycle measured with a compression-molded film of the ethylene/$\alpha$-olefin interpolymer, and having a density, d, in grams/cubic centimeter, wherein the numerical values of Re and d satisfying the following relationship when ethylene/$\alpha$-olefin interpolymer being substantially free of a cross-linked phase:

$$Re > 1481 - 1629(d);$$

or

(d) having a molecular fraction which elutes between 40 °C and 130 °C when fractionated using TREF, characterized in that the fraction having a molar comonomer content of at least 5 percent higher than that of a comparable random ethylene interpolymer fraction eluting between the same temperatures, wherein said comparable random ethylene interpolymer having the same comonomer(s) and having a melt index, density, and molar comonomer content (based on the whole polymer) within 10 percent of that of the ethylene/α-olefin interpolymer; or

(e) having a storage modulus at 25 °C, G' (25 °C), and a storage modulus at 100 °C, G' (100 °C), wherein the ratio of G' (25 °C) to G' (100 °C) being in the range of about 1:1 to about 9:1.

Such olefin block copolymer, e.g. ethylene/α-olefin interpolymer may also:

(a) have a molecular fraction which elutes between 40 °C and 130 °C when fractionated using TREF, characterized in that the fraction having a block index of at least 0.5 and up to about 1 and a molecular weight distribution, $M_w/M_n$, greater than about 1.3; or

(b) have an average block index greater than zero and up to about 1.0 and a molecular weight distribution, $M_w/M_n$, greater than about 1.3.

In certain embodiments, the base polymer may, for example, comprise a polar polymer, having a polar group as either a comonomer or grafted monomer. In exemplary embodiments, the base polymer may, for example, comprise one or more polar polyolefins, having a polar group as either a comonomer or grafted monomer. Exemplary polar polyolefins include, but are not limited to, ethylene-acrylic acid (EAA) and ethylene-methacrylic acid copolymers, such as those available under the trademarks PRIMACOR™, commercially available from The Dow Chemical Company, NUCREL™, commercially available from E.I. DuPont de Nemours, and ESCOR™, commercially available from Exxon-Mobil Chemical Company and described in U.S. Patent Nos. 4,599,392, 4,988,781, and 5,938,437, each of which is incorporated herein by reference in its entirety. Other exemplary base polymers include, but are not limited to, ethylene ethyl acrylate (EEA) copolymer, ethylene methyl methacrylate (EMMA), and ethylene butyl acrylate (EBA).

In one embodiment, the base polymer may, for example, comprise a polar polyolefin selected from the group consisting of ethylene-acrylic acid (EAA) copolymer, ethylene-methacrylic acid copolymer, and combinations thereof, and the stabilizing agent may, for example, comprise a polar polyolefin selected from the group consisting of ethylene-acrylic acid (EAA) copolymer, ethylene-methacrylic acid copolymer, and combinations thereof; provided, however, that base polymer may, for example, have a lower acid number, measured according to ASTM D-974, than the stabilizing agent.

**Stabilizing Agent**

The dispersion according to the present invention may further comprise at least one or more stabilizing agents, also referred to herein as dispersion agents, to promote the formation of a stable dispersion. The stabilizing agent may preferably be an external stabilizing agent. The dispersion of the instant invention comprises 1 to 45 percent by weight of one or more stabilizing agents, based on the total weight of the solid content of the dispersion. All individual values and subranges from 1 to 45 weight percent are included herein and disclosed herein; for example, the weight percent can be from a lower limit of 1, 3, 5, 10 weight percent to an upper limit of 15, 25, 35 , or 45 weight percent. For example, the dispersion may comprise from 1 to 15, or in the alternative from 1 to 25, or in the alternative from 1 to 35, or in the alternative from 1 to 45 percent by weight of one or more stabilizing agents, based on the total weight of the solid content of the dispersion. In selected embodiments, the stabilizing agent may be a surfactant, a polymer, or mixtures thereof. In certain embodiments, the stabilizing agent can be a polar polymer, having a polar group as either a comonomer or grafted monomer. In exemplary embodiments, the stabilizing agent comprises one or more polar polyolefins, having a polar group as either a comonomer or grafted monomer. Exemplary polymeric stabilizing agents include, but are not limited to, ethylene-acrylic acid (EAA) and ethylene-methacrylic acid copolymers, such as those available under the trademarks PRIMACOR™, commercially available from The Dow Chemical Company, NUCREL™, commercially available from E.I. DuPont de Nemours, and ESCOR™, commercially available from ExxonMobil Chemical Company and described in U.S. Patent Nos. 4,599,392, 4,988,781, and 5,938,437, each of which is incorporated herein by reference in its entirety. Other exemplary polymeric stabilizing agents include, but are not limited to, ethylene ethyl acrylate (EEA) copolymer, ethylene methyl methacrylate (EMMA), and ethylene butyl acrylate (EBA). Other ethylene-carboxylic acid copolymer may also be used.

Other stabilizing agents that may be used include, but are not limited to, long chain fatty acids, fatty acid salts, or fatty acid alkyl esters having from 12 to 60 carbon atoms. In other embodiments, the long chain fatty acid or fatty acid salt may have from 12 to 40 carbon atoms.

The stabilizing agent may be partially or fully neutralized with a neutralizing agent. In certain embodiments, neutralization of the stabilizing agent, such as a long chain fatty acid or EAA, may be from 25 to 200 percent on a molar basis; or in the alternative, it may be from 50 to 110 percent on a molar basis. For example, for EAA, the neutralizing agent may be a base, such as ammonium hydroxide or potassium hydroxide, for example. Other neutralizing agents can include lithium hydroxide or sodium hydroxide, for example. In another alternative, the neutralizing agent may, for example, be a carbonate. In another alternative, the neutralizing agent may, for example, be any amine such as monoethanolamine, or 2-amino-2-methyl-1-propanol (AMP). Amines useful in embodiments disclosed herein may include monoethanolamine, diethanolamine, triethanolamine, and TRIS AMINO (each available from Angus), NEUTROL TE (available from BASF), as well as triisopropanolamine, diisopropanolamine, and N,N-dimethylethanolamine (each available from The Dow Chemical Company, Midland, MI). Other useful amines may include ammonia, monomethylamine, dimethylamine, trimethylamine, monoethylamine, diethylamine, triethylamine, mono-n-propylamine, dimethyl-n propylamine, N-methanol amine, N-aminoethylethanolamine, N-methyldiethanolamine, monoisopropanolamine, N,N-dimethyl propanolamine, 2-amino-2-methyl-1-propanol, tris(hydroxymethyl)-aminomethane, N,N,N'-tetrakis(2-hydroxylpropyl) ethylenediamine, 1.2-diaminopropane. In some embodiments, mixtures of amines or mixtures of amines and surfactants may be used. In some embodiments, the amine is dimethyl ethanol amine.

Additional stabilizing agents that may be useful in the practice of the present invention include, but are not limited to, cationic surfactants, anionic surfactants, or non-ionic surfactants. Examples of anionic surfactants include, but are not limited to, sulfonates, carboxylates, and phosphates. Examples of cationic surfactants include, but are not limited to, quaternary amines. Examples of non-ionic surfactants include, but are not limited to, block copolymers containing ethylene oxide and silicone surfactants. Stabilizing agents useful in the practice of the present invention can be either external surfactants or internal surfactants. External surfactants are surfactants that do not become chemically reacted into the base polymer during dispersion preparation. Examples of external surfactants useful herein include, but are not limited to, salts of dodecyl benzene sulfonic acid and lauryl sulfonic acid salt. Internal surfactants are surfactants that do become chemically reacted into the base polymer during dispersion preparation. An example of an internal surfactant useful herein includes 2,2-dimethylol propionic acid and its salts. Additional surfactants that may be useful in the practice of the present invention include cationic surfactants, anionic surfactants, non-ionic surfactants, or combinations thereof.

## Fluid Medium

The dispersion further comprises a fluid medium. The fluid medium may be any medium; for example, the fluid medium may be water. The dispersion of the instant invention comprises 25 to 85 percent by weight of the fluid medium, based on the total weight of the dispersion. In particular embodiments, the water content may be in the range of from 35 to 75, or in the alternative from 35 to 70, or in the alternative from 45 to 60 percent by weight of the fluid medium, based on the total weight of the dispersion.

## Forming the Dispersion

The dispersion according to the present invention can be formed by any number of methods recognized by those having skill in the art. In one embodiment, one or more base polymers, one or more stabilizing agents are melt-kneaded in an extruder along with water and a neutralizing agent, such as ammonia, potassium hydroxide, or a combination of the two to form a dispersion. In some embodiments, the dispersion is first diluted to contain about 1 to about 3% by weight water and then, subsequently, further diluted to comprise greater than about 25% by weight water.

Any melt-kneading means known in the art may be used. In some embodiments, a kneader, a BANBURY® mixer, single-screw extruder, or a multi-screw extruder, e.g. a twin screw extruder, is used. A process for producing the dispersions in accordance with the present invention is not particularly limited. For example, an extruder, in certain embodiments, for example, a twin screw extruder, is coupled to a back pressure regulator, melt pump, or gear pump. In one embodiment, the process for producing the dispersions according to the present invention is free of a pressurized control vessel. Exemplary embodiments also provide a base reservoir and an initial water reservoir, each of which includes a pump. Desired amounts of base and initial water are provided from the base reservoir and the initial water reservoir, respectively. Any suitable pump may be used, but in some embodiments, for example, a pump that provides a flow of about 150 cc/min at a pressure of 240 bar is used to provide the base and the initial water to the extruder. In other embodiments, a liquid injection pump provides a flow of 300 cc/min at 200 bar or 600 cc/min at 133 bar. In some embodiments, the base and initial water are preheated in a preheater.

One or more base polymers, in the form of pellets, powder, or flakes, are fed from the feeder to an inlet of the extruder where the resin is melted or compounded. In some embodiments, the dispersing agent is added to one or more base polymers through and along with the resin and in other embodiments, the dispersing agent is provided separately to the twin screw extruder. The resin melt is then delivered from the mix and convey zone to an emulsification zone of the extruder where the initial amount of water and base from the water and base reservoirs are added through an inlet.

In some embodiments, dispersing agent may be added additionally or exclusively to the water stream. In some embodiments, further dilution water may be added via water inlet from water reservoir in a dilution and cooling zone of the extruder. Typically, the dispersion is diluted to at least 30 weight percent water in the cooling zone. In addition, the diluted mixture may be diluted any number of times until the desired dilution level is achieved. In some embodiments, water is not added into the twin screw extruder but rather to a stream containing the resin melt after the melt has exited from the extruder. In this manner, steam pressure build-up in the extruder is eliminated and the dispersion is formed in a secondary mixing device such as a rotor stator mixer.

**End-use Applications**

The dispersions of the present invention may be used, for example, in different coating applications such as packaging applications such as a multilayer structure comprising a substrate and sealing layer derived from such dispersions. Such substrates comprise polymeric materials such as polyethylene, polypropylene, polyethylene terephthalate, combinations thereof. Such substrates can be films, e.g. uniaxial oriented film or biaxial oriented film, laminated structures. Such multilayer structures can have any thickness, for example, in the range of from 10 to 170 microns. All individual values and subranges from 10 to 100 microns are included herein and disclosed herein; for example, the thickness can be from a lower limit of 10, 20, 30, 40, 50, 60, 70, 80, 100, 120, 140 or 160 microns to an upper limit of 15, 25, 35, 45, 55, 65, 75, 85, 95, 100, 110, 130, 150 or 170 microns. For example, the multilayer structure thickness can be from 10 to 170 microns, or in the alternative, the multilayer structure thickness can be from 10 to 50 microns, or in the alternative, the multilayer structure thickness can be from 100 to 170 microns, or in the alternative, the multilayer structure thickness can be from 20 to 80 microns, or in the alternative, the multilayer structure thickness can be from 30 to 70 microns, or in the alternative, the multilayer structure thickness can be from 40 to 60 microns.

Packages made from the dispersions of the present invention may be used to package liquids, such as beverages, particulates, such pellets, and/or solids, such as food products.

In one embodiment, the present invention provides a multilayer structure comprising: (a) a substrate, wherein said substrate is optionally surface treated on at least one surface and has a surface energy in the range of at least 32 dyn, (b) a sealing layer derived from the application of one or more aqueous dispersions to said at least one surface of said substrate, and wherein the one or more aqueous dispersion comprise the melt kneading product of: (a) one or more a base polymers selected from the group consisting of ethylene and optionally one or more $\alpha$-olefins, propylene and optionally one or more $\alpha$-olefins; (b) one or more a stabilizing agents; (c) in the presence of a neutralizing agent and (d) water.

In one embodiment, the inventive multilayer structure comprises a sealing layer that is characterized by one or more of the following characteristics: (a) has a heat seal strength of greater than or equal to 0.6 N/15 mm at a sealing temperature from 60 to 100 °C; (b) has a heat seal strength of greater than or equal to 3 N/15 mm at a sealing temperature from 110 to 140 °C.

In one embodiment, the inventive multilayer structure comprises a dispersion having a pH in the range of from 8 to 11.

In one embodiment, the inventive multilayer structure comprises a dispersion having an average particle size diameter in the range of from 0.5 to 5 $\mu$m.

In one embodiment, the inventive multilayer structure comprises a dispersion comprising 40 to 70 percent by weight of water.

In one embodiment, the inventive multilayer structure comprises a sealing layer having a thickness in the range of from 0.5 to 10 microns ($\mu$m).

The present disclosure provides a flexible container. In an embodiment, the flexible container includes a first film and a second film. Alternatively, the flexible container can be formed from a single sheet that is folded, the fold defining the first film and the second film. Each of the first film and the second film may comprise a sealing layer made from the inventive dispersions.

In an embodiment, the flexible container is in the form of one or more of the following: a pouch, a sachet, and a stand up pouch, and may have a peripheral heat seal which is a combination of a hard seal and a frangible seal.

In another embodiment, the flexible container is in the form of a pouch, a sachet, a stand up pouch and the peripheral heat seal defines the container interior. The flexible container further includes a frangible seal internal to the peripheral heat seal and defining a first compartment and a second or more compartments.

Nonlimiting examples of contents suitable for containment by flexible containers include comestibles (beverages, soups, cheeses, cereals), liquids, shampoos, oils, waxes, emollients, lotions, moisturizers, medicaments, pastes, surfactants, gels, adhesives, suspensions, solutions, enzymes, soaps, cosmetics, liniments, flowable particulates, and combinations thereof.

The flexible container may comprise two or more embodiments disclosed herein.

**Examples**

The following examples illustrate the present invention but are not intended to limit the scope of the invention. The following examples demonstrate multilayer structures comprising one or more sealing layers having improved properties.

**Formulation components:**

**Component A** is an ethylene-octene copolymer having Melt Index ($I_2$) of approximately 2 g/10 minutes, a density of approximately 0.87 g/cm$^3$, which is commercially available from The Dow Chemical Company under the trademark AFFINITY™ 8200.

**Component B** is an ethylene- acrylic acid copolymer having Melt Index ($I_2$) of approximately 300 g/10 minutes, and an acrylic acid content of approximately 9.6%, which is commercially available from The Dow Chemical Company under the trademark PRIMACOR™ 5980.

**Component C** is a propylene-ethylene copolymer having Melt Index ($I_2$) of approximately 8 g/10 minutes, a density of approximately 0.876 g/cm$^3$, which is commercially available from The Dow Chemical Company under the trademark VERSIFY™ 3200.

**Component D** is a propylene-ethylene copolymer having Melt Index ($I_2$) of approximately 25 g/10 minutes, a density of approximately 0.866 g/cm$^3$, which is commercially available from The Dow Chemical Company under the trademark VERSIFY™ 4301.

**Component E** is a peroxide-cracked propylene-ethylene copolymer having Melt Index ($I_2$) of approximately 109 g/10 minutes, which was provided by from The Dow Chemical Company.

**Component F** is an ethylene-octene copolymer having Melt Index ($I_2$) of approximately 30 g/10 minutes, a density of approximately 0.87 g/cm$^3$, which is commercially available from The Dow Chemical Company under the trademark ENGAGE™ 8407.

**Component G** is a propylene-ethylene copolymer grafted with maleic anhydride having an acid number of approximately 100, which is commercially available from BakerPetrolite under the trademark BHX 10075.

**KOH** is potassium hydroxide having a CAS number 1310-58-3.

**DMEA** is dimethyl ethanol amine having CAS number 108-01-0.

**Inventive Polyolefin Dispersions 1-2 (IPOD 1-2)**

IPOD 1-2 are prepared based on the following process based on the formulation components reported in Table 1. The base polymer and stabilizing agent was continuously melt kneaded approximately 150° C in a twin screw extruder in the presence of a neutralizing agent (DMEA) and water, and further diluted by the addition of supplemental water. The properties of the IPOD 1-2 include the followings: an average volume diameter, measured by a Coulter LS230 particle analyzer, of approximately in the range of from 0.5 to 1.5 microns, pH of approximately in the range 8.5 to 10.5, and a solid content of approximately in the range of from 40 to 55 percent, based on the weight of the dispersion.

**Comparative Polyolefin Dispersions 1-5 (CPOD 1-5)**

CPOD 1-5 are prepared based on the following process based on the formulation components reported in Table 1. The base polymer and stabilizing agent was continuously melt kneaded at approximately 150° C in a twin screw extruder in the presence of a neutralizing agent (potassium hydroxide) and water, and further diluted by the addition of supplemental water. The properties of the CPOD 1-5 include the followings: an average volume diameter, measured by a Coulter LS230 particle analyzer, of approximately in the range of from 0.5 to 1.5 microns, pH of approximately in the range 8.5 to 10.5, and a solid content of approximately in the range of from 40 to 55 percent, based on the weight of the dispersion.

**Inventive Samples 1-2 and Comparative Samples 1-5 (IS 1-2 and CS 1-5)**

Each IPOD 1-2 and CPOD 1-5 were applied on to a corona-treated side of a biaxial oriented polypropylene film, having a thickness of approximately 1 micron via a bar-coater, with a bar having 4 micron target coating. Samples were dried for 4 minutes at 80° C in a standard ventilated oven. Seal strength, hot tack and optical properties were measured, are reported in Table 2. In particular, seal strength was assessed by sealing at indicated temperature (both upper and lower jaws) for 1 sec dwell time at a pressure of 3 bar.

## Table 1

|  | Base Polymer (W%) | Stabilizing Agent (W%) | Neutralizing Agent |
|---|---|---|---|
| IPOD-1 | Component D (80 w%) | Component B (10 w%) and Component G (10 w%) | DMEA |
| IPOD-2 | Component F (85 w%) | Component B (15 w%) | DMEA |
| CPOD-1 | Component A (60 w%) | Component B (40 w%) | KOH |
| CPOD-2 | Component A (85 w%) | Component B (15 w%) | KOH |
| CPOD-3 | Component C (70 w%) | Component B (30 w%) | KOH |
| CPOD-4 | Component D (85 w%) | Component B (15 w%) | KOH |
| CPOD-5 | Component E (80 w%) | Component B (10 w%) and Component G (10 w%) | KOH |

## Table 2

|  | Seal strength at 120° C, N/15 mm | Optics, qualitative | Seal strength at 60° C, N/15 mm | Seal strength at 120° C, N/15 mm | Haze, % | Clarity, % |
|---|---|---|---|---|---|---|
| IS-1 | 3.68 | Slightly hazy | 0.76 | 3.68 | 6.03 | 97.6 |
| IS-2 | 2.58 | Slightly hazy | 0.89 | 2.58 | 3.17 | 91 |
| BOPP* | 2.50 | Transparent, glossy | 0 | 2.50 | 2.01 | 98.0 |
| CS-1 | 0.22 | Very hazy | --- | --- | --- | --- |
| CS-2 | 2.03 | Very hazy | --- | --- | --- | --- |
| CS-3 | 0.60 | Very hazy | --- | --- | --- | --- |
| CS-4 | 1.89 | Hazy | 0 | 1.89 | 8.03 | 95.6 |
| CS-5 | 3.79 | Slightly hazy | 0.57 | 3.79 | 4.01 | 94.7 |
| * BOPP is the substrate used for the other examples without any coating (uncoated film). | | | | | | |

**Inventive Sample 2A and Comparative Samples 2A (IS A2 and CS 2A)**

IPOD2 was applied on the corona-treated side of a BOPP film via a lab-scale laminator from Nordmeccanica using gravure cylinder and subsequently the coated film was wound upon itself, unwound, cut, and then sealed. After 48 hours, its properties were measured and reported in Table 3. Experimental conditions, such as e.g. pressure of coating roll, speed of primary web, setup of drying tunnel, were optimized and coating thickness was in the range of 1-2 micron. In particular, pressure of coating roll was kept between 2.5 and 3.5 bars, web speed was varied from 35 to 50 m/min employing an oven profile similar to one used for lamination of water-based adhesives.

## Table 3

|  | Seal strength at 60° C, N/15 mm | Seal strength at 80° C, N/15 mm | Seal strength at 100° C, N/15 mm | Seal strength at 120° C, N/15 mm | Hot Tack range, °C | Haze, % | Clarity, % |
|---|---|---|---|---|---|---|---|
| Base film | 0 | 0 | 1 | 2.50 | 110-130 | 1.58 | 98 |
| Inventive coating 2 | 3.0 | 2.7 | 2.8 | 3 | 50 - 160 | 3.30 | 90 |
| *Seal strength was assessed by sealing at above temperature while both upper and lower jaws were exerting pressure for 1 about second dwell time at a pressure of 3 bar. | | | | | | | |

**Inventive Polyolefin Dispersions 3 (IPOD 3)**

IPOD 3 is prepared based on the following process based on the formulation components reported in Table 1. The base polymer and stabilizing agent was continuously melt kneaded approximately 150° C in a twin screw extruder in the presence of a neutralizing agent (potassium hydroxide) and water, and further diluted by the addition of supplemental water. The properties of the IPOD 1-2 include the followings: an average volume diameter, measured by a Coulter LS230 particle analyzer, of approximately in the range of from 0.5 to 1.5 microns, pH of approximately 9, and a solid content of approximately 45 percent, based on the weight of the dispersion.

**Inventive Samples 3-4 (IS 3-4)**

Films samples composed by a laminated structure based on 12 microns PET film laminated to a 45 microns PE film (total thickness of 67 microns) were used as substrates for IS 3 and 4. Polyethylene surface was corona treated up to 42 dynes/cm and IPOD 3 (2 $g/m^2$ for IS 3 and 5 $g/m^2$ for IS 4) was applied on to polyethylene side, having a thickness of approximately 1 micron via a bar-coater.. Heat Seal properties of IS 3-4 were measured and are reported in Figure 1.

**Comparative Sample 6-7 (CS 6-7)**

Comparative sample 6 is the PET/PE laminated film used to prepare IS 3 and 4, without any POD coating neither corona treatment, total thickness of 67 microns.
Comparative sample 7 is the PET/PE laminated film used to prepare IS 3 and 4, without any POD coating and corona treated up to 42 dynes/cm, total thickness of 67 microns.
Heat Seal properties of CS 6-7 were measured and are reported in Figure 1.

**Test Methods**

Test methods include the following:
Seal strength was assessed by sealing at the indicated temperature (both upper and lower jaws) for 1 sec dwell time at a pressure of 3 bar, following ASTM F2029-00 (practice B, web sealability).
Density was measured in accordance with ASTM D-1928.
Melt index ($I_2$), for ethylene-based polymers, was measured in accordance with ASTM D-1238 at 190 °C and at 2.16 kg.
Melt flow rate (MFR) was measured in accordance with ASTM D-1238 at 230 °C with a 2.16 kg weight for propylene-based polymers.
Haze % was measured according to ASTM D1003-11.
Clarity % was according to ASTM D1003-11.
Hot tack range was measured according to ASTM F1921-98.
Surface energy is measured using ARCOTEC. test inks and test pens available from Lotar Enterprises. As a starting point for each check, a test ink or test pen with a medium value should be applied, e.g., 38 mN/m (dyne/cm). If the line of ink stays unchanged, for at least 2 seconds on the surface of the material, without turning into droplets, the surface energy of the material is the same, or higher, than the surface tension of the fluid. In this case, the test ink/test pen with the next higher value is applied to the surface, e.g., 40 mN/m (dyne/cm). This check is repeated with the next higher value of surface tension, up to the point, at which, within 2 seconds, the line of fluid turns into separate droplets. If already at the starting point (38 mN/m (dyne/cm)) droplets are formed from the line of fluid, the check is continued with test inks/test pens of lower values.
The present invention may be embodied in other forms without departing from the spirit and the essential attributes thereof, and, accordingly, reference should be made to the appended claims, rather than to the foregoing specification, as indicating the scope of the invention.

**Claims**

1.  A multilayer structure comprising:

    a substrate, wherein said substrate is optionally surface treated on at least one surface and has a surface energy in the range of at least 32 dyn,
    a sealing layer derived from the application of one or more aqueous dispersions to said at least one surface of said substrate, and wherein the one or more aqueous dispersion comprise the melt kneading product of: (a) one or more a base polymers selected from the group consisting of ethylene and optionally one or more $\alpha$-olefins, propylene and

optionally one or more $\alpha$-olefins; (b) one or more a stabilizing agents; (c) in the presence of a neutralizing agent and (d) water.

2. The multilayer structure of claim 1, wherein said sealing layer is **characterized by** one or more of the following characteristics: (a) a heat seal strength of greater than or equal to 0.6 N/15 mm at a sealing temperature from 60 to 100 °C; and (b) a heat seal strength of greater than or equal to 3 N/15 mm at a sealing temperature from 110 to 140 °C.

3. The multilayer structure according to any one of the preceding claims, wherein said sealing layer is **characterized by** one or more of the following characteristics: (a) has a lower heat seal initial temperature than neat substrate; (b) has a heat seal strength lower than neat substrate

4. The multilayer structure according to any one of the preceding claims, wherein said dispersion has a pH in the range of from 8 to 11.

5. The multilayer structure according to any one of the preceding claims, wherein said dispersion has an average particle size diameter in the range of from 0.5 to 5 $\mu$m.

6. The multilayer structure according to any one of the preceding claims, wherein said dispersion comprises 40 to 70 percent by weight of water.

7. The multilayer structure according to any one of the preceding claims, wherein said sealing layer has a thickness in the range of from 0.5 to 10 $\mu$m.

8. The multilayer structure according to any one of the preceding claims, wherein said base polymer is an ethylene $\alpha$-olefin copolymer having a density in the range of from 0.860 to 0.920 g/cm$^3$ and a melt index ($I_2$) in the range of from 5 to 100 g/10 minutes.

9. The multilayer structure according to any one of the preceding claims, wherein said base polymer is a propylene $\alpha$-olefin copolymer having a density in the range of from a melt flow rate in the range of from 5 to 100 g/10 minutes and a heat of fusion in the range of less than 85 g/joules.

10. The multilayer structure according to any one of the preceding claims, wherein the structure is a packaging.

11. The packaging of claim 10, wherein the packaging is in the form of a pouch, a sachet, or a stand up pouch.

12. The packaging of any one of claims 10-11, wherein the packaging is used to hold one or more contents selected from the group consisting of comestibles, liquids, shampoos, oils, waxes, emollients, lotions, moisturizers, medicaments, pastes, surfactants, gels, adhesives, suspensions, solutions, enzymes, soaps, cosmetics, liniments, flowable particulates, and combinations thereof

Fig. 1

Europäisches
Patentamt

European
Patent Office

Office européen
des brevets

**EUROPEAN SEARCH REPORT**

Application Number

EP 14 38 2094

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2011/142947 A1 (DOW GLOBAL TECHNOLOGIES LLC [US]; MALOTKY DAVID L [US]; HOFMANN SANDRA) 17 November 2011 (2011-11-17)<br>* example inventive example 1 *<br>* page 40, lines 17-19 *<br>----- | 1,4-12 | INV.<br>C08J7/04 |
| X | WO 2005/085331 A1 (DOW GLOBAL TECHNOLOGIES INC [US]; MONCLA BRAD M [US]; ECKERSLEY SARAH) 15 September 2005 (2005-09-15)<br>* example 2 *<br>* table 3; compound rod #4 *<br>* table 4 *<br>----- | 2,3 | |
| A | EP 1 489 132 A2 (KUREHA CHEMICAL IND CO LTD [JP] KUREHA CORP [JP])<br>22 December 2004 (2004-12-22)<br>* example 1 *<br>* paragraph [0015] *<br>----- | 1-12 | |
| A | EP 2 540 499 A1 (BOREALIS AG [AT])<br>2 January 2013 (2013-01-02)<br>* claim 2 *<br>* table 2 *<br>----- | 1-12 | TECHNICAL FIELDS SEARCHED (IPC)<br><br>C08J |

The present search report has been drawn up for all claims

| Place of search | Date of completion of the search | Examiner |
|---|---|---|
| The Hague | 30 June 2014 | Yildirim, Zeynep |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

................................................................

& : member of the same patent family, corresponding
   document

EPO FORM 1503 03.82 (P04C01)

**ANNEX TO THE EUROPEAN SEARCH REPORT
ON EUROPEAN PATENT APPLICATION NO.**

EP 14 38 2094

This annex lists the patent family members relating to the patent documents cited in the above-mentioned European search report.
The members are as contained in the European Patent Office EDP file on
The European Patent Office is in no way liable for these particulars which are merely given for the purpose of information.

30-06-2014

| Patent document cited in search report | | | Publication date | Patent family member(s) | | | Publication date |
|---|---|---|---|---|---|---|---|
| WO 2011142947 | A1 | | 17-11-2011 | CA | 2798688 | A1 | 17-11-2011 |
| | | | | CN | 102985484 | A | 20-03-2013 |
| | | | | EP | 2569374 | A1 | 20-03-2013 |
| | | | | JP | 2013531701 | A | 08-08-2013 |
| | | | | KR | 20130106277 | A | 27-09-2013 |
| | | | | US | 2013059165 | A1 | 07-03-2013 |
| | | | | WO | 2011142947 | A1 | 17-11-2011 |
| WO 2005085331 | A1 | | 15-09-2005 | BR | PI0506124 | A | 24-10-2006 |
| | | | | CA | 2536397 | A1 | 15-09-2005 |
| | | | | CN | 1860159 | A | 08-11-2006 |
| | | | | CN | 102391536 | A | 28-03-2012 |
| | | | | EP | 1718693 | A1 | 08-11-2006 |
| | | | | JP | 4809324 | B2 | 09-11-2011 |
| | | | | JP | 2007525323 | A | 06-09-2007 |
| | | | | KR | 20060052990 | A | 19-05-2006 |
| | | | | MX | PA06006273 | A | 23-08-2006 |
| | | | | US | 2005100754 | A1 | 12-05-2005 |
| | | | | US | 2010048784 | A1 | 25-02-2010 |
| | | | | US | 2011071244 | A1 | 24-03-2011 |
| | | | | US | 2012009417 | A1 | 12-01-2012 |
| | | | | US | 2012029132 | A1 | 02-02-2012 |
| | | | | WO | 2005085331 | A1 | 15-09-2005 |
| EP 1489132 | A2 | | 22-12-2004 | AT | 430176 | T | 15-05-2009 |
| | | | | CN | 1572278 | A | 02-02-2005 |
| | | | | EP | 1489132 | A2 | 22-12-2004 |
| | | | | JP | 2005007827 | A | 13-01-2005 |
| | | | | KR | 20040110061 | A | 29-12-2004 |
| | | | | US | 2005013953 | A1 | 20-01-2005 |
| EP 2540499 | A1 | | 02-01-2013 | CN | 103608177 | A | 26-02-2014 |
| | | | | EP | 2540499 | A1 | 02-01-2013 |
| | | | | ES | 2462004 | T3 | 22-05-2014 |
| | | | | KR | 20140027504 | A | 06-03-2014 |
| | | | | PT | 2540499 | E | 06-03-2014 |
| | | | | WO | 2013000767 | A1 | 03-01-2013 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 3645992 A
- US 4076698 A
- US 5272236 A
- US 5278272 A
- US 5504172 A
- WO 0001745 A
- US 6960635 B
- US 6525157 B
- US 988999 P
- US 08082599 W
- WO 2005090427 A
- US 20060199930 A
- US 4599392 A
- US 4988781 A
- US 5938437 A